(19) Europäisches Patentamt
European Patent Office
Office européen des brevets

(11) Publication number: **0 217 410 B1**

(12) **EUROPEAN PATENT SPECIFICATION**

(45) Date of publication of patent specification: **18.09.91**

(51) Int. Cl.[5]: **G11B 5/702**, G11B 5/70

(21) Application number: **86113682.8**

(22) Date of filing: **03.10.86**

Divisional application 90101603.0 filed on 03/10/86.

(54) **Phosphorylated reaction products and compositions incorporating such products.**

(30) Priority: **04.10.85 US 784909**

(43) Date of publication of application:
**08.04.87 Bulletin 87/15**

(45) Publication of the grant of the patent:
**18.09.91 Bulletin 91/38**

(84) Designated Contracting States:
**AT BE CH DE FR GB IT LI LU NL SE**

(56) References cited:
**EP-A- 0 112 924**
**EP-A- 0 112 925**
**EP-A- 0 143 337**
**EP-A- 0 146 897**
**US-A- 4 526 837**

**PATENT ABSTRACTS OF JAPAN, vol. 8, no. 265 (P-318)[1702], 5th December 1984; & JP - A - 59 132 417**

(73) Proprietor: **UNION CARBIDE CORPORATION**
**39 Old Ridgebury Road**
**Danbury Connecticut 06817(US)**

(72) Inventor: **Colon, Ismael**
**57 Curtis Avenue**
**Piscataway 08854 New Jersey(US)**
Inventor: **Mallon, Charles Bernard**
**290 Shelburne Place**
**Belle Mead 08502 New Jersey(US)**
Inventor: **Johnson, Robert Norman**
**Frohlin Drive Box 260A**
**Basking Ridge 07920 New Jersey(US)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

**EP 0 217 410 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to novel phosphorylated reaction products and, more particularly, to novel products for use in compositions such as magnetic recording media for enhancement of the dispersion and magnetic property characteristics of such medium.

Over the years, magnetic recording has come to occupy a vital place in a myriad of industries. Magnetic tape is accordingly utilized for audio, video, computer, instrumentation and other recordings. Magnetic recording media are utilized in a variety of forms, including, for example, magnetic cards and disks, reels, video tapes, high performance audio tapes, computer tapes, floppy disks, and the like.

While there are several different types of magnetic recording media, all types comprise a layer of magnetic particles, sometimes referred to as "pigment," coated on a plastic, paper or metal base. Information to be recorded is stored in the magnetic pigment as a series of small domains magnetized by a recording head. The coating layer of the magnetic medium includes a binder system which provides a cohesive matrix between the magnetic pigment particles and adheres such particles to the base.

The magnetic coating is applied to the base by coating equipment such as, for example, a gravure roll coater, and the coated base then typically immediately proceeds to a magnetic orientation step wherein orientation of the pigment particles is effected on the undried layer. In this step, the long axis of the pigment particles, typically acicular crystals, is made to coincide with the magnetization direction.

In order to achieve good recording performance, the magnetic coating must possess a wide variety of characteristics. Pigment particles, desirably of relatively uniform particle size, should form as high a proportion of the coating layer as possible. Further, the degree of dispersion of the pigment particles in the coating, often evaluated as degree of gloss, should be as high as possible. Further, the highly dispersed pigment particles must be capable of being adequately oriented, as previously described (the degree of orientation often measured as "squareness").

Still further, the adhesion and wear resistance of the magnetic coating or film should be high. Also, the coefficient of friction of the magnetic surface should be low against the recording and playback head material, and yet have an adequate value against the driving means, such as pinch rollers and capstan rollers.

Satisfying these and other diverse criteria has proven to require a delicate balance of basically reciprocal, or opposing, properties. A substantial amount of effort over the years has been directed to improving the various characteristics of magnetic recording media.

To satisfy the performance criteria, the binder system must possess adequate modulus, yet have satisfactory tensile strength and resilience. It has generally been found more desirable to satisfy these criteria by utilizing more than one material in the binder system. Typically, a polymer of relatively high molecular weight which is capable of being cross-linked or cured is utilized to provide the desired modulus. Various elastomers are also incorporated to achieve the desired resilience and toughness.

Conventional binder systems include a wide variety of high Tg (viz., glass transition temperature) hardening polymers or resins, such as, for example, polyacrylates, polyesters, polyester amides, polyhydroxyethers and copolymers from monomers such as vinyl chloride, vinyl acetate, acrylonitrile, vinyl alcohol, vinyl butyral, and vinylidene chloride in combination with low Tg elastomeric polymers, including nitrile rubbers, polyesters, alkyd resins and polyester polyurethanes. The latter elastomers often represent the material of choice for high performance applications. Such resins have excellent toughness and abrasion resistance.

Typically, the hardening polymers contain hydroxyl functionality since cross-linking to further increase the modulus, durability and abrasion resistance characteristics can then be achieved by using polyfunctional isocyanates. While satisfactory cross-linking can be achieved with polyfunctional isocyanates, such materials are notoriously sensitive to moisture, which can cause problems. Also, cross-linking occurs over a period of time, including while the magnetic recording medium is in storage. Premature cross-linking may also make calendering of the recording medium difficult or impossible.

It would accordingly be desirable to provide a binder resin capable of being cured or cross-linked by electron beam radiation techniques. Various electron beam curable, multifunctional acrylates and methacrylates are known. The difficulty is the method by which such materials may be utilized since these materials have mechanical properties and surface wear resistance characteristics that are generally considered inadequate for magnetic coatings.

The degree of dispersion and the capability of the pigment particles to be oriented in many binder systems are often considered inadequate in the absence of dispersion aids. A wide variety of techniques have been proposed to improve these characteristics. Thus, many surface active agents have been employed for this purpose. These include higher aliphatic amines, higher fatty acids, phosphoric acid esters

of higher alcohols such as polyoxyethylene phosphate alkyl ethers, esters of higher fatty aoids and sorbitol, sodium alkylbenzenesulfonate, betaine-type, nonionic surface active agents and the like.

Magnetic coatings obtained by employing such surface active agents generally exhibit uniform dispersion of magnetic powder as well as good orientation where the powder or pigment is in the form of acicular particles. On the other hand, utilization of such agents often adversely affects wear resistance or causes difficulties in quality during use. These problems are often attributed to migration or blooming of such surface active agents to the magnetic coating surface or to unnecessary plasticization of the hardening resin or of other components in the magnetic coating.

One attempt to obviate the migration problem is suggested by GB-A-2,097,415. This suggests using with a cross-linkable or polymerizable resin binder a phosphoric acid ester having at least one polymerizable unsaturated double bond. Preferably, the phosphoric acid ester is a product obtained by reacting a phosphoric acid ester of a compound having two or more hydroxyl groups with an acrylic or methacrylic compound having a functional group reactive with an isocyanate group and also with a polyisocyanate compound. The phosphoric esters disclosed include two major types: (1) the reaction products of a long chain alkylether or polyester, an acrylic or methacrylic compound having a functional group reactive with an isocyanate group, and a polyisocyanate compound and (2) phosphoric esters of hydroxyalkyl acrylates.

Other binder systems disclosed utilize compounds including various hydrophilic groups such as sulfates, sulphonates, phosphonates and the like. JP-A-57,116,474 (59-8127) discloses a magnetic layer binder composition of a polyurethane and optionally a polyester containing sulphonate groups, and a vinyl chloride polymer containing sulphonate, sulphate, carboxylate or phosphonate groups. The binder is stated to have good dispersing function to magnetic powder and the recording medium to have excellent service durability and good surface gloss.

JP-A-57-092421(8229) discloses a magnetic recording medium which includes a polyester urethane having (1) at least one hydrophilic group such as $-SO_3M$, $-OSO_3H$, -COOM, $-P(O)(OM')_2$, $-NH_2$, -NHR, $NR_1R_2$, and $NR_1R_2R_3$, wherein M may be H, Li, Na or K; M' may be H, Li, Na, K or a hydrocarbon group; and the R groups may be a hydrocarbon group and (2) at least two acrylic-type double bonds.

JP-A-57-092422(8229) discloses a magnetic layer containing a polyurethane or polyester resin having (1) at least one hydrophilic group selected from $-OSO_3H$, -COOM, $-P(O)(OM')_2$, wherein M may be H, Li, Na, or K and M' may be H, Li, Na, or K or a hydrocarbon group, and (2) a molecular weight of 200 to 5000 per hydrophilic group.

WO-A-84-00240 discloses a magnetic recording medium containing a polyvinyl chloride-vinyl acetate-vinyl alcohol and a polyurethane resin containing polar groups such as $-SO_3M$, $-OSO_3M'$ -COOM or

$$\begin{array}{c}(OM_2)\\ |\\ -\underset{\|}{P}-(OM_1)\\ O\end{array}$$

wherein M and M' are as defined above and $M_1$ and $M_2$ may be Li, Na, K or an alkyl group, preferably an alkyl group with up to 23 carbon atoms.

JP-A-55-117734(8043) discloses a binder for a magnetic recording medium which contains a copolymer of a phosphoric acid ester of an alkylene glycol acrylate or an alkylene glycol methacrylate and a copolymerizable monomer. The wetting properties to ferromagnetic material is stated to be very good, so that dispersibility in the binder is improved. Blooming is said not to occur as no high aliphatic acid, metallic soap, or the like is used.

Among the binder polymers in use in magnetic coating media are commercially available, partially hydrolyzed, (viz., partly saponified) vinyl chloride-vinyl acetate copolymers and terpolymers and phenoxy resins. For the highest performance applications, such as computer tapes, floppy disks and the like, phenoxy resins are often the binder resin of choice because of the superior durability, toughness and thermal stability that is provided.

Unfortunately, the dispersion and orientation characteristics of coatings utilizing such binder polymers are typically less than is desired. Considerable efforts have been undertaken to improve these characteristics with the use of a wide variety of dispersion aids.

US-A-4,420,537 thus discloses a magnetic recording medium including a commercially available vinyl chloride-vinyl acetate-vinyl alcohol copolymer and a phosphoric ester-type anionic surfactant (e.g., "GAFAC® RE 610"). It is noted that when the content of the surfactant is more than 5 weight percent of the

coating, the surfactant is bloomed out from the magnetic layer.

US-A-4,153,754 to Huisman notes difficulties. with prior dispersing agents. Low molecular weight agents, such as lecithin, have the disadvantage that an excess is necessary to fully cover the particles to be dispersed. The high molecular weight dispersing agents, as described, for example in NL-A-65.11015, have the disadvantage that, due to their poor wetting properties, agglomerates of the particles are also covered with a dispersing agent. It is not readily possible, or it is possible only by the use of much energy, to disintegrate such agglomerates to individual particles. Huisman suggests using an N-acylsarcosine derivative as a dispersing agent with the binders. The Examples show use of such a dispersing agent with a commercially available phenoxy resin and a vinyl chloride-vinyl acetate-vinyl alcohol terpolymer.

US-A-4,291,100 discloses a magnetic recording medium utilizing a polyoxyethylenesorbitane higher fatty acid ester surfactant. The Examples include use of such surfactants with vinyl chloride-vinyl acetate copolymers and vinyl chloride-vinyl acetate-vinyl alcohol, terpolymers.

US-A-4,305,995 shows a magnetic recording medium including a mixture of sorbitane mono-, di-, and tri-higher fatty acid ester surfactants. The Examples show use of such surfactants with vinyl chloride-vinyl acetate copolymers.

US-A-4,330,600 discloses a magnetic recording medium in which the dispersion characteristics of magnetizable particles are improved which results in improved saturation magnetic flux density and squareness ratio. These are achieved by treating the magnetizable particles with a titanium alcoholate compound having at least one group which is easily hydrolyzed and at least one oleophilic group which is hard to hydrolyze in an organic solvent. The Examples show use of such titanium alcoholates with a commercially available vinyl chloride-vinyl acetate copolymer binder.

US-A-4,400,435 notes that vinyl chloride-vinyl acetate copolymers have been used as binders, but that such copolymers do not have functional groups whereby it is easy to improve the dispersibility of magnetic powder in a magnetic layer. It is further said that it is not easy to carry out a thermosetting reaction. The use of vinyl chloride-vinyl acetate-vinyl alcohol copolymers instead had been proposed; and, because of the hydroxyl groups present, the dispersibility of magnetic powder is improved and the thermosettable reaction can be performed. However, because of the vinyl alcohol component, the glass transition temperature of the copolymer is disadvantageously high so as to provide difficulties in improving the surface properties by a calendar process. A magnetic recording medium having improved orientation and maximum residual magnetic flux density is provided by using a vinyl chloride-vinyl acetate-maleic acid copolymer having a content of the maleic acid component of at least 1.5 percent.

In addition to the problems of providing a binder system in which the pigment particles can be highly dispersed to form a magnetic coating in which such particles can then be readily oriented in the first instance, the manner of usage can create further problems. Thus, achieving adequate dispersion requires use of relatively high energy mixing equipment. As one example, a mixture of the binder system in a solvent is provided, and the mixture is then thoroughly kneaded and agitated on a 3-roll or high speed agitation mixer or kneader. The resulting slurry is then often transferred to a ball mill, sand grind mill or other dispersion equipment to achieve an even higher degree of dispersion of the magnetic particles in the coating.

If the coating is used rather promptly after formation, no problem results. However, as is sometimes the case, usage requirements may dictate that the coating mixture be stored. Such storage can result in substantial decay of the advantageous dispersion characteristics originally achieved. The use of such "stale" coating mixtures thus presents problems as regards the processing required to allow the pigment particles to attain the desired orientation when such coating mixtures are used and processed. It is obviously economically undesirable to be forced to repeat the initial, high energy mixing sequence.

Accordingly, despite the considerable prior effort in this field, the need remains for a straightforward solution that will allow use of otherwise desirable binders to achieve the desired dispersion and orientation characteristics over a widespread variety of usage requirements.

A principal object of the present invention is to provide novel phosphorylated compositions for use in applications such as a magnetic coating to impart desirable dispersion and orientation characteristics.

A further object of this invention provides a novel binder system for a magnetic recording medium which may be substituted for conventional binders in formulations as essentially a plug-in substitution.

Yet another object lies in the provision of novel phosphorylated compositions that may be obtained by utilizing a straightforward, facile synthesis.

Another object of the present invention is to provide a binder system for magnetic recording medium which minimizes or eliminates the need to employ a dispersing agent which can cause blooming in use.

A still further object lies in the provision of a magnetic coating which is capable of being processed in conventionally utilized magnetic coating equipment.

Yet another object lies in the provision of a magnetic coating which may be stored for extended periods of time and yet may be readily processed to provide, upon usage, the desired magnetic characteristics.

Another object is to provide a binder system capable of being cross-linked or cured by electron beam radiation. A related object is to provide a hardening resin that is curable by electron beam radiation and which further provides desirable dispersion characteristics.

A further object of the present invention lies in the provision of a dispersing agent which can be chemically combined within the binder system to obviate migration or blooming in the cured coating.

These and other objects of the present invention will be apparent from the description set forth hereinafter.

The invention is defined in the claims.

The present invention is based on the discovery that conventional vinyl chloride-vinyl ester copolymers and terpolymers may be phosphorylated to provide magnetic recording media having desirable dispersion and magnetic characteristics. Such phosphorylated compositions can be synthesized in a straightforward, facile manner and can provide a magnetic coating having the viscosity and other characteristics that allow usage in conventional magnetic coating equipment. Inclusion in conventional magnetic coating formulations does not require significant change. By suitable selection in the synthesis, the resulting binder system should be capable of being cured by electron beam radiation. The resulting system may also be stored for extended periods of time before usage, and the system may thereafter be readily treated with a relatively low-molecular weight phosphorylated material of this invention to allow achievement of the necessary magnetic characteristics. The relatively low molecular weight phosphorylated material may likewise be used as an additive in conventional binder systems for the same purpose. By suitable selection of the low molecular weight phosphorylated material for the particular curing technique to be employed, such materials will be chemically combined in the cured coating and will not bloom or migrate.

In accordance with one aspect of the present invention, the hardening resin utilized to provide the requisite modulus and other strength characteristics is suitably phosphorylated to provide characteristics adequate to aohieve the requisite pigment dispersion and magnetic properties. In accordance with another aspect of this invention, a phosphorylated dispersant material capable of reaction directly or indirectly with the binder utilized is employed.

As used herein, the term "phosphorylation" means the conversion of hydroxyl groups to phosphates. Accordingly, the phosphorylated compositions of the present invention can be likewise considered as phosphate esters.

A variety of vinyl chloride-vinyl ester copolymers and terpolymers has been previously utilized in magnetic recording media. The number average molecular weight should be at least about 1000, more typically at least about 2000. Useful resins with number average molecular weights up to about 25,000 are commercially available. Conventionally, only the higher molecular weight materials, for example, those having a molecular weight greater than about 15,000 or so, are used as hardening resins in magnetic recording media. Especially suitable vinyl chloride-vinyl ester copolymers or terpolymers are those in which some or all of the ester groups have been hydrolyzed. In general, such copolymers and terpolymers consist of vinyl chloride, a vinyl ester and vinyl alcohol, preferably in the molar ratio of about 28-32 vinyl chloride to about 0.5-8 vinyl alcohol to about 0 to 4 vinyl ester. Vinyl esters suitably used in the preparation of these terpolymers include vinyl formate, vinyl acetate, vinyl propionate, vinyl butyrate, and the like. Other higher vinyl esters up to about 6 carbon atoms likewise may be used.

Other equally suitable copolymers and terpolymers are hydroxyalkyl acrylate and methacrylate-modified vinyl chloride polymers such as the random hydroxyl-functional copolymers or terpolymers of vinyl chloride, hydroxyalkyl acrylate or methacrylate having 2 to about 5 carbons in the alkyl segment, and vinyl esters of carboxylic acids of 1 to about 6 carbon atoms, such as vinyl acetate, vinyl propionate, and the like. Suitable hydroxyl-functional copolymers and terpolymers are described in US-A-3,884,887 and 3,755,271. In general, the molar ratio of the components of such copolymers and terpolymers is about 12-20 vinyl chloride to about 0-3 vinyl ester to about 1-3 hydroxyalkylacrylate or methacrylate.

The vinyl chloride-vinyl ester and vinyl chloride-vinyl ester-hydroxyalkyl acrylate and methacrylate copolymers and terpolymers described above will be sometimes referred to hereinafter as the "vinyl resins."

In accordance with the present invention, the vinyl resin starting material selected is suitably phosphorylated to provide the desired magnetic coating component. Due to the thermal stability characteristics of such materials, the phosphorylation reaction should be carried out at a temperature and under such conditions as to avoid significant degradation of the vinyl resin. The phosphorylation reaction temperature may be varied depending on the composition and molecular weight of the vinyl resin, the phosphorylating agent used, and also on the presence or absence of thermal stabilizers known to those skilled in the art, the

use of such stabilizers allowing the reaction to be carried out at temperatures higher than would otherwise be desirable due to the thermal stability characteristics of the vinyl resins.

The phosphorylation reaction may be carried out by dissolving the starting vinyl resin in an aprotic solvent to which the desired phosphorylating agent is added with stirring. The reaction may proceed at room temperature with stirring until the reaction is complete.

Suitable phosphorylating agents include phosphorus pentoxide, phosphorus pentoxide derivatives, and phosphoryl chloride and its derivatives. Specifically, suitable phosphorylation agents include phosphoryl chloride and its derivatives: $PO(OR^3)_{n'}$ $-Cl_{3-n'}$, wherein n' is 0, 1, 2, or 3 and $R^3$ is hydrogen, a saturated or unsaturated hydrocarbon radical having from 1 to about 20 carbon atoms, a cycloalkyl radical of from 1 to about 20 carbon atoms, an alkyl acrylate or methacrylate in which the alkyl radical is from 1 to about 10 carbon atoms, aryl and substituted aryl of from 6 to about 20 carbon atoms and adducts of hydroxyalkyl acrylates and methacrylates and a lactone (as described more fully hereinafter), and mixtures thereof, or phosphorus pentoxide or the reaction product of phosphorus pentoxide with a hydroxyl-containing material, including water, saturated or unsaturated alcohols having from 1 to 20 carbon atoms, hydroxyalkyl acrylates or methacrylates having from 2 to 10 carbon atoms, substituted and unsubstituted phenols and adducts of hydroxyalkyl acrylates and methacrylates and a lactone which will be described more fully hereinafter, and mixtures thereof.

Alternatively, in the case of a hydroxyalkyl acrylate or methacrylate-modified vinyl chloride copolymer or terpolymer, the acrylate or methacrylate may be initially phosphorylated. The phosphorylated intermediate may then be used to either synthesize the desired copolymer or terpolymer, or may be employed as a phosphorylating agent for any of the vinyl chloride polymers described herein. This is likewise true when other hydroxyl-functional monomers are used.

In carrying out the phosphorylation of the vinyl resins, the reaction should utilize a phosphorylating agent and conditions that will avoid the formation of significant amounts of higher molecular weight species, as would result when two of the starting vinyl resins are linked through the phosphate moiety. Inclusion of small amounts of water in the reaction mixture prevents the formation of such species. Typically, the vinyl resins, as prepared and as commercially available, contain a small amount of water which is sufficient to prevent the formation of such species. However, the relatively high level of water sometimes present in such vinyl resins generally results in the inefficient utilization of the phosphorylating agent. As an alternative, the vinyl resins may be dried and the level of water optimized to maximize the utilization of the phosphorylating agent while still preventing the formation of significant amounts of the high molecular weight species.

Also, as has been previously described, the degree of phosphorylation can vary widely but should be sufficient to improve the pigment wetting properties of the vinyl resins. The extent to which the vinyl resins are phosphorylated is not particularly critical but will depend on a number of factors insofar as the utility of the phosphorylated resin in the preparation of magnetic coatings is concerned. To that end, the extent or level of phosphorylation must be such that the phosphorylated resin is soluble in the aprotic solvents conventionally used in preparing magnetic coatings in an amount sufficient to provide the desired binder system and to permit application of the binder system to the desired base.

Further, the degree of phosphorylation must be such that the phosphorylated resin remains compatible with other components of the binder system, particularly the elastomeric polymer employed, such as a polyurethane, and the like.

With respect to the higher molecular weight materials, e.g., about 8000 or greater, the Tg of these materials should generally not be lowered to significantly less than 65°C. With respect to lower molecular weight materials, that is, those of about 8000 or less, the Tg of the vinyl resin when cross-linked or cured should likewise not be significantly less than 65°C, again to insure the desired modulus of the coating.

The level or degree of phosphorylation suitable to provide the desired characteristics will generally be such that, based on the weight of the phosphorylated vinyl resin, the phosphorus content of the material may be as low as about 0.03% by weight, more desirably at least about 0.1% and even more desirably at least about 0.3%. Levels as high as about 1% by weight are typically preferred, and levels up to perhaps even as high as about 3% by weight may be suitable.

When the starting material selected has an adequate molecular weight to provide the requisite modulus and other characteristics for the particular magnetic recording medium application, an essentially plug-in substitution in the conventional formulations using such starting materials as hardening resins may be utilized. However, even starting materials of lower molecular weights will of course be suitable although conventional hardening resins may be needed to build the desired modulus for the particular application. Alternatively, building of the modulus of the lower molecular weight materials may be achieved during the curing process.

Reaction Product Design Considerations

It should be appreciated that the extent of phosphorylation desired must take into account the degree of conversion achieved with the particular process conditions used. A desired phosphorylation level may be achieved by adjusting the relative concentrations of the reactants utilized.

With vinyl resins, conversion levels obtained will vary widely, depending upon the process conditions and the reactivity of the phosphorylating agent employed. Under the conditions used in the Examples herein, conversions of about 10 to 20% should be obtained. Adjustment of the concentrations of the reactants used should take such conversion levels into account. The particular conversion obtained in a given situation should be capable of being determined in a straightforward manner by analysis.

Separation need not be considered. As long as the reaction product has the desired level of phosphorylated material, the reaction product may be directly used in magnetic coatings.

Description of the Phosphorylated Products

It can be seen from the description of the phosphorylating agents described above that phosphorus may be included in the phosphorylated vinyl resins in the form of a wide variety of phosphorus ester moieties, characterized by the formula:

$$-\overset{\overset{O}{\|}}{P}-(OR^{12})_2$$

wherein $R^{12}$ comprises hydrogen, alkyl (e.g. ethyl or n-butyl) or alkenyl having from 1 to about 20 carbon atoms, an alkyl acrylate or methacrylate residue having from 2 to about 10 carbon atoms in the alkyl segment, substituted and unsubstituted phenyl, the lactone-adduct described in the following or mixtures thereof. The just mentioned lactone-acrylate adduct may be represented by the following formula:

$$CH_2=\overset{\overset{R^4}{|}}{C}-\underset{\underset{O}{\|}}{C}-O-R^5-O-[\overset{\overset{O}{\|}}{C}-(\underset{\underset{R^6}{|}}{\overset{\overset{R^6}{|}}{C}})_x-O]_yH$$

wherein $R^4$ is hydrogen or methyl, $R^5$ is an alkylene group of from 2 to about 10 carbon atoms, $R^6$ is independently hydrogen or an alkyl group of from 1 to about 12 carbon atoms,

x is an integer of from about 4 to about 7, and y is an integer of from 1 to about 10.

The lactones suitable for use in preparing the lactone-acrylate adduct are characterized by the following formula:

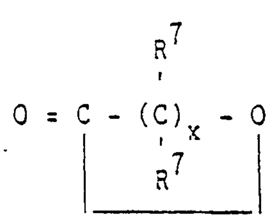

wherein $R^7$ is independently hydrogen or an alkyl of from 1 to about 12 carbon atoms, and x is from about 4 to about 7. The preferred lactone is epsilon-caprolactone.

The hydroxyalkyl acrylates and methacrylates which may be used include 2-hydroxyethyl acrylate and methacrylate, hydroxypropyl acrylate and methacrylate, hydroxybutyl acrylate and methacrylate, 2-hydroxy 3-chloro-propyl acrylate and methacrylate, 2,3-dihydroxy propyl acrylate and methacrylate, and the like, or mixtures thereof. Also, if desired, in the formula previously set forth, the terminal methylene group could

have one of the hydrogen atoms replaced by a methyl group. The resulting adduct would likely be less reactive to electron beam radiation than acrylates or methacrylates.

The formula for the phosphorus moieties represents an idealized formula. Depending upon the reaction conditions and the particular phosphorylating agent employed, the resulting reaction product comprises a distribution of mono-, di- and triphosphate esters. Accordingly, in the idealized formula, $R^{12}$ may be solely hydrogen (providing a phosphate monoester), a mixture of hydrogen and the hydrocarbon residue of the hydrocarbon from which the derivative was prepared (providing a diester), or solely the hydrocarbon residue (providing a triester). For the purpose of the present invention, the phosphorus moiety will be described in terms of the formula set forth, wherein the formula is used to represent the reaction product, including those situations wherein a complex mixture or distribution of compositions is obtained.

Magnetic Recording Medium

Base

Any base or substrate may be utilized, and the particular substrate of choice will be dictated for the most part by the particular application. Polyethylene terephthalate and polypropylene films are in wide use as base materials for magnetic recording media. Where heat resistance is an important consideration, a polyimide film, polyamide film, polyarylether film, or the like may be utilized. In the case of a polyester film as a thin base, it is often used after monoaxial or biaxial orientation. It is likewise well known that pretreatment of the film may be beneficial to promote wetting and adhesion.

Composition of the magnetic coating layer

The magnetic particles may be any of those known and useful in conventional magnetic recording media. Representative examples include acicular or granular $\gamma$-$Fe_2O_3$, $Fe_3O4$, Co-doped $\gamma$-$Fe_2O_3$, Co-doped $\gamma Fe_2O_3$-$Fe_3O_4$ solid solution, Co-base-compound-adsorbed $\gamma$-$Fe_2O_3$, a Co-base-compound-adsorbed $Fe_3O_4$ (including those oxidized to an intermediate state between itself and $\gamma$-$Fe_2O_3$), and acicular $CrO_2$. (The term "Co-base compound" as used herein means cobalt oxide, cobalt hydroxide, cobalt ferrite, cobalt ionadsorbates and the like which enable the magnetic particules to take advantage of the magnetic anisotropy of cobalt in improving its coercive force). Also, the magnetic particle may be a ferromagnetic metal element or alloy, such as Co, Fe-Co, Fe-Co-Ni, or the like. Such a fine magnetic particle is prepared in a number of ways, including wet reduction of the starting material with a reducing agent such as $NaBH_4$, a treatment of the iron oxide surface with a Si compound and subsequent dry reduction with $H_2$ gas or the like, and vacuum evaporation in a low pressure argon gas stream. Fine particles of monocrystalline barium ferrite may be employed as well. The fine magnetic powder is used in the form of acicular or granular particles, depending on the application of the resulting magnetic recording medium.

It will be generally desirable to utilize a relatively large amount of magnetic particles in the coating layer. Typical compositions of the coating layer will thus include about 65 or 70 to about 85 or 90 percent magnetic particles, based upon the total weight of the coating layer. As is known, it is desirable to utilize pigment particles of relatively uniform size, with typically used particles having a long axis of about 0.4 $\mu$m or even less being employed. The remainder of the coating layer will comprise the binder system, including the hardening resin, and typically an elastomeric polymer, a dispersant, a cross-linker and any auxiliary agents. Depending upon the novel phosphorylated material of the present invention which is utilized, the dispersant as such may be minimized or even eliminated. Further, when electron beam radiation curable materials are used, the cross-linking agent need not be employed.

Accordingly, and conceptually, in addition to the pigment particles, the only additional essential component in accordance with this invention is the hardening resin itself. Typical coating layers will, however, often include the additional components identified depending upon the particular end use application. As is apparent from the amount utilized in typical formulations of the pigment particles, the remainder of the coating layer will generally represent about 10 or 15 to 30 or 35 percent by weight of the coating layer.

As has been previously discussed, the binder system will generally, and desirably, include an elastomeric polymer in an amount sufficient to provide the coating layer with the desired resilience and the like. Many elastomeric polymers suitable for this purpose are known and may be utilized. Polyester urethanes are often preferred for high performance applications. Suitable materials are commercially available. These materials may be, in general, described as the reaction products of polyester polyols, short chain diols, and isocyanates. These resins have excellent toughness and abrasion resistance characteristics.

A wide variety of polyisocyanate cross-linkers is known and may be used. As one example, it is suitable

to use toluene diisocyanate (TDI). The amount of the cross-linking agent used is typically about 20 to 30 percent of the amount that would be required stoichiometrically.

As is known, a variety of auxiliary-agents is sometimes employed in the magnetic coating layer. Such additives are known and may be employed, if desired for the particular application. Examples of such auxiliary agents include antistatic agents, lubricants, sensitizers, leveling agents, wear-resisting agents, and film-reinforcing agents.

In further accordance with the present invention, the magnetic coating layer utilizes the phosphorylated materials of the present invention to provide the necessary dispersing and orientation characteristics of the coating, and, in some instances, function as the hardening resin as well. If the phosphorylated material has characteristics which provide the necessary modulus and the like for the magnetic coating layer, no other hardening resin need be employed. However, if desired, the phosphorylated materials of the present invention can be utilized with compatible hardening resins to provide the desired magnetic coating layer.

In accordance with this invention, the use of the phosphorylated materials of the present invention should provide improved dispersion and orientation characteristics. However, if desired, other conventional dispersing agents may be employed.

## Preparation of Coating

The recording medium may generally be prepared by dissolving the binder system in a sufficiently volatile vehicle to provide a coatable dispersion of fine magnetizable particles. The dispersion can then be coated onto the substrate to provide a coating thereon. The magnetic recording medium may be prepared by methods described in the art such as in, for example, S. Tochihara, "Magnetic Coatings and their Applications in Japan," Progress in Organic Coatings, 10 (1982), pages 195 to 204.

## Post-Additive Treatment

In accordance with yet another aspect of the present invention, the phosphorylated materials of the present invention may be utilized to, in effect, rejuvenate the decayed properties of magnetic compositions stored for some time prior to usage. Often, after storage, magnetic compositions which exhibited satisfactory dispersion during preparation possess undesirable orientation characteristics when processed to form a tape or the like due to change in the compositions during storage. The addition of appropriate phosphorylated materials of the present invention will, without a repetition of the high energy mixing techniques used to prepare the magnetic compositions in the first instance, allow the coating to provide adequate magnetic properties upon orientation. When used in this fashion, it is preferred to utilize the lower molecular weight phosphorylated materials of this invention. Suitable materials will generally have a molecular weight of less than about 4000. In general, the lower molecular weight materials are more effective. It is thus preferred to utilize the phosphorylated vinyl resins having a number average molecular weight of less than about 4000.

Usage of these materials can provide substantial restoration of the properties and should achieve more than adequate orientation, as is evidenced by the squareness measurement. Selected usage of these materials as a post-additive provides the further advantage that there is no blooming or migration of the additive. To this end, the phosphorylated vinyl resins are particularly desired for use in binder systems which are to be isocyanate-cured because of the presence of residual hydroxyl groups on the vinyl resin which are capable of being cross-linked and chemically combined in the coating as a result of the isocyanate cure. When used in the respective binder systems described, these materials are chemically combined in the cured coating and do not migrate or bloom.

## Other Applications

While use of the phosphorylated materials of the present invention provides highly advantageous properties in magnetic recording media and the present invention has been described in conjunction with this application, it should be appreciated that such materials likewise can be utilized as dispersants and/or hardening resins in any other application where the characteristics of such phosphorylated materials could desirably be incorporated. For example, conventional zinc-rich coatings are useful in many applications which require corrosion resistance and the like. Such compositions typically comprise a high percentage of zinc particles (up to about 85 to 90 percent by weight of the composition) and a resin, together with such optional components as antisettling agents, thickening agents and water scavengers, as is known. For zinc-rich maintenance coatings, and other clear and pigmented coatings, any of the phosphorylated materials of the present invention should provide improved dispersibility and improved adhesion to substrates. The

phosphorylated materials of this invention can accordingly be readily utilized in conjunction with such coatings.

Further, the more highly phosphorylated materials of this invention should be water dispersible and thus may be useful in applications where this property would be desirable, such as, for example, in water-borne coatings.

## EXAMPLES

The following Examples are representative of the present invention, and not in, limitation thereof. The starting materials used, the preparation of the, magnetic media formulations, and the evaluation techniques utilized in the ensuing Examples were as follows:

### Starting Materials

#### Vinyl Resin A

A commercially available vinyl chloride-vinyl acetate-hydroxypropyl acrylate terpolymer having a number average molecular weight of about 2000, an average hydroxyl content of 4% by weight and a hydroxyl equivalent weight, on a solids basis, of 400.

#### Vinyl Resin B

A commercially available vinyl chloride-vinyl acetate-hydroxypropyl acrylate terpolymer having a number average molecular weight of about 4000, an average hydroxyl content of 3% by weight and a Tg of 40 ° C.

#### Vinyl Resin C

A commercially available vinyl chloride-vinyl acetate-hydroxypropyl acrylate copolymer having a number average molecular weight of about 8000, an average hydroxyl content of 2.3% by weight, and a Tg of 65 ° C.

#### Vinyl Resin D

A commercially available, partially hydrolyzed vinyl chloride-vinyl acetate copolymer having a number average molecular weight of about 23,000, an average hydroxyl content of 2.3% by weight, and a Tg of 79 ° C.

#### Vinyl Resin E

A commercially available, partially hydrolyzed vinyl chloride-vinyl acetate copolymer having a number average molecular weight of about 23,000, an average hydroxyl content of 5% by weight, and a Tg of 79 ° C.

#### Elastomer A

B.F. Goodrich "Estane® 5701 F-1" polyester polyurethane elastomer having a specific gravity of 1.21, a Tg of -25 ° C and a Brookfield viscosity, of 300 mPa•s (cps) for a 15% total solids solution in tetrahydrofuran.

### Preparation Of The Magnetic Media Formulations

Formulations were prepared by premixing 134 grams of a 15 percent cyclohexanone solution of the resin with 160 grams of cyclohexanone and adding 200 grams of cobalt-modified, iron oxide magnetic pigment with particles having a long axis of about 0.4 $\mu$m ("PFERRICO® 2566" magnetic pigment, Pfizer, Inc.). After the mixture was well blended with an air stirrer for 15-30 minutes, the resulting slurry was added to a Premier Mill filled with 1.3mm glass beads and milled for about one hour.

Those formulations containing only vinyl resins, including the phosphorylated derivatives of the present

invention, were discharged at this point and evaluated. Those to contain Elastomer A were stopped at this stage, and the Elastomer A was added (134 grams of a 15% solution in cyclohexanone). The formulation was then milled for an additional hour and discharged.

Any post-additions were made at this stage by mixing the ingredients by hand with a spatula or a stirring rod. The percentages in such post-additions are all based upon the weight of the pigment in the formulation.

Magnetic Media Evaluations

Gloss

This was evaluated by preparing a 0.0254mm (1-mil) drawdown on glass, allowing the formulation to air dry and then measuring the gloss with a 60% gloss meter.

Squareness

This was measured by preparing a 0.0762mm (3-mil) wet drawdown on a Mylar® substrate and then pulling the Mylar® across a bar magnet to orient the magnetic particles. Squareness was then measured on a 5.1 x 5.1cm (2X2 inch) piece of this oriented coating using a LDJ Model 7000A B-H Meter. According to the pigment manufacturer, the maximum squareness achievable with the magnetic pigment utilized is 0.84.

EXAMPLES 1-13

These Examples show the preparation of novel phosphate esters in accordance with this invention prepared from vinyl resins.

These phosphate esters were prepared by dissolving the vinyl resin precursor in an aprotic solvent, either acetone or cyclohexanone, and adding phosphorus pentoxide with stirring. The reaction was carried out at room temperature with stirring for 24 hours or until all of the phosphorus pentoxide had been dissolved, whichever was longer. All of the samples were stored at room temperature until used. All of the samples were used without further purification, with the exception of Example 7 which was precipitated from acetone, washed with warm water and dried in a vacuum oven to a constant weight.

Table I sets forth the starting materials used, the percent of phosphorus pentoxide being based upon the weight of the starting material, and the percent substitution being the theoretical percentage of the initial hydroxyl groups present converted to phosphate esters, assuming that 3 phosphate esters are produced from each $P_2O_5$ molecule:

TABLE I

| EXAMPLE | STARTING MATERIAL | % $P_2O_5$ | % SUBSTITUTION |
|---|---|---|---|
| 1 | Vinyl Resin A | 4 | 32 |
| 2 | Vinyl Resin A | 1 | 8 |
| 3 | Vinyl Resin A | 2 | 16 |
| 4 | Vinyl Resin A | 5 | 40 |
| 5 | Vinyl Resin A | 7.5 | 60 |
| 6 | Vinyl Resin B | 3.3 | 40 |
| 7 | Vinyl Resin C | 6 | 100 |
| 8 | Vinyl Resin D | 0.5 | 11 |
| 9 | Vinyl Resin D | 1.0 | 22 |
| 10 | Vinyl Resin D | 1.3 | 22 |
| 11 | Vinyl Resin D | 2.5 | 55 |
| 12 | Vinyl Resin D | 4.0 | 81 |
| 13 | Vinyl Resin E | 3.3 | 24 |

EXAMPLE 14

As noted above, the reaction product of Example 7 (Resin C) was purified according to the following

procedure. About 80 ml of the Example 7 solution was rapidly stirred while an equal volume of 80/20 mixture of isopropanol/$H_2O$ was slowly added. A precipitate formed. After stirring for 20 minutes at room temperature, 160 ml of $H_2O$ were added and the mixture stirred for about an additional 20 minutes. The precipitate was collected by filtration, washed twice with warm water and dried at 50° C under vacuum to constant weight. It was found by atomic adsorption spectroscopic analysis of the precipitate that the Vinyl Resin C phosphate contained 0.34% by weight phosphorus.

EXAMPLE 15

A 15% solution of Vinyl Resin D in 500 g cyclohexanone was reacted with 4 g of $P_2O_5$ with stirring at room temperature. After 24 hours from the start of the reaction, a portion of the solution was precipitated by slowly adding the solution to about five times its volume of ice water in a running blender. The resulting polymer was collected by filtration, washed several times with warm water, and dried to constant weight in a vacuum oven at 40-50° C. The polymer was analyzed for phosphorus content and found to contain 0.4% phosphorus by weight of the polymer by atomic adsorption spectroscopic analysis. The same precipitation was carried out on another part of the sample 48 hours after the first sampling, that is, 72 hours from the start of the phosphorylating reaction; and the phosphorus content, by weight, was found to be the same within experimental error.

EXAMPLES 16-24

These Examples illustrate the improved characteristics achieved with the novel phosphorylated materials of the present invention as compared with the starting resins.

Coatings were made as has been hereinbefore described from the starting resins and from the novel phosphorylated resin reaction products prepared in Examples 1 and 6-13. No dispersants were added to either the controls or to the phosphorylated resins. The gloss and squareness characteristics are set forth in Table II:

TABLE II

| EXAMPLE NO. | RESIN | 60° GLOSS | SQUARENESS |
|---|---|---|---|
| Control | Vinyl Resin A | 60 | 0.82 |
| 16 | Ex. 1 | 102 | 0.84 |
| Control | Vinyl Resin B | 34 | 0.82 |
| 17 | Ex. 6 | 71 | 0.82 |
| Control | Vinyl Resin C | 53 | 0.82 |
| 18 | Ex. 7 | 104 | 0.84 |
| Control | Vinyl Resin D | 59 | 0.78 |
| 19 | Ex. 8 | 52 | 0.82 |
| Control | Vinyl Resin D | 59 | 0.78 |
| 20 | Ex. 9 | 65 | 0.82 |
| Control | Vinyl Resin D | 59 | 0.78 |
| 21 | Ex. 10 | 65 | 0.82 |
| Control | Vinyl Resin D | 59 | 0.78 |
| 22 | Ex. 11 | 58 | 0.84 |
| Control | Vinyl Resin D | 59 | 0.78 |
| 23 | Ex. 12 | 62 | 0.83 |
| Control | Vinyl Resin E | 57 | -- |
| 24 | Ex. 13 | 73 | 0.83 |

As can be seen, the novel phosphorylated materials of the present invention provide coatings with higher gloss and/or improved squareness in all instances, relative to the starting resin.

Squareness for Vinyl Resin E was not measured.

EXAMPLES 25-28

These Examples demonstrate the disperse characteristics of the phosphorylated vinyl resins of the

present invention in the presence of Elastomer A, the amount of Elastomer A added to the coating being that set forth in the general preparation. The results are set forth in Table III:

TABLE III

| EXAMPLE NO. | RESIN | GLOSS | SQUARENESS |
|---|---|---|---|
| 25 | Ex. 8 | 58 | 0.75 |
| 26 | Ex. 9 | 61 | 0.76 |
| 27 | Ex. 11 | 42 | 0.81 |
| 28 | Ex. 12 | 40 | 0.82 |

As can be seen from these Examples the phosphorylated vinyl resins of the present invention provide improved dispersion and magnetic characteristics to a magnetic coating compared to their parent, unphosphorylated, resins.

EXAMPLES 29-31

These Examples demonstrate the effectiveness of the phosphorylated vinyl resins of the present invention as post-additives.

Magnetic coatings were prepared utilizing a 50-50 mixture of Vinyl Resin F and Elastomer A. The squareness of this control was then evaluated in comparison to the post-addition treatment with equivalent amounts of Vinyl Resin A and the phosphorylated products of Examples 3 to 5 as well as with the result obtained with a prior art surfactant. The results are set forth in Table IV:

TABLE IV

| EXAMPLE NO. | ADDITIVE | % PHOSPHORYLATION | SQUARENESS |
|---|---|---|---|
| Control | - | - | 0.72 |
| Control | 4% Vinyl Resin A | - | 0.74 |
| 29 | 4% - Ex. 3 | 16 | 0.76 |
| 30 | 4% - Ex. 4 | 40 | 0.78 |
| 31 | 4% - Ex. 5 | 60 | 0.83 |
| Prior Art | 4% GAFAC® RE-610 | - | 0.84 |

As can be seen, the use of the phosphorylated vinyl resin of this invention enhances the squareness characteristics of the magnetic coating. The vinyl resins are especially useful in isocyanate-cured binder systems and obviate the known migration or blooming problem of the prior art surfactant due to the cross-linking of the vinyl resin during isocyanate cure of the binder system.

## Claims

**1.** A phosphorylated composition of a vinyl chloride-based polymer for enhancing the dispersibility of particles in a medium, wherein said vinyl chloride-based polymer has a number average molecular weight of at least about 1000 and at least about 0.1 percent by weight hydroxyl groups present therein or in the monomers from which said polymer is prepared prior to the phosphorylation, and is selected from

(i) vinyl chloride-vinyl ester copolymers and terpolymers wherein at least some of said vinyl ester groups are hydrolyzed, said vinyl ester being an ester of a saturated carboxylic acid having from 1 to 6 carbon atoms, and

(ii) a hydroxyl-functional copolymer or terpolymer of vinyl chloride, a hydroxyalkyl acrylate or methacrylate having from 2 to 5 carbon atoms in the alkyl segment, and a vinyl ester of a saturated carboxylic acid having from 1 to 6 carbon atoms;

a sufficient number of the hydroxyl groups in said vinyl chloride-based polymer having been phosphorylated to provide at least about 0.1 percent phosphorus by weight.

2. The composition of claim 1 wherein the number average molecular weight of said vinyl chloride copolymer or terpolymer is at least about 2000.

3. The composition of claim 1 wherein the number average molecular weight of said vinyl chloride copolymer or terpolymer is at least about 4000.

4. The composition of claim 1 wherein the number average molecular weight of said vinyl chloride copolymer or terpolymer is at least about 8000.

5. The composition of claim 1 wherein the number average molecular weight of said vinyl chloride copolymer or terpolymer is at least about 23000.

6. The composition of any one of claims 1 to 5 wherein said vinyl chloride copolymer or terpolymer has a molar ratio of from about 28 to about 32 vinyl chloride to about 0.5 to about 8 vinyl alcohol and to 0 to about 4 vinyl ester.

7. The composition of any one of claims 1 to 5 wherein said vinyl chloride copolymer or terpolymer is a hydroxyl-functional copolymer or terpolymer with a molar ratio of from about 12 to about 20 vinyl chloride to about 1 to about 3 hydroxyalkyl acrylate or methacrylate and to 0 to about 3 vinyl ester.

8. The composition of claim 6 or 7 wherein said vinyl ester is vinyl acetate.

9. The composition of claim 8 wherein said vinyl chloride copolymer or terpolymer is a vinyl chloride-hydroxyethyl acrylate copolymer; a vinyl chloride-hydroxypropyl acrylate copolymer; a vinyl chloride-hydroxyethyl acrylate-vinyl acetate copolymer; or a vinyl chloride-hydroxypropyl acrylatevinyl acetate terpolymer.

10. The composition of claim 1 wherein said composition is a phosphorylated vinyl chloride copolymer or terpolymer in which a sufficient percentage of the hydroxyl groups present is phosphorylated to provide at least about 0.3 percent, phosphorus by weight.

11. A composition according to any one of claims 1 to 10, wherein the phosphorus moiety of the phosphorylated hydroxyl group is characterized by the formula:

$$-\overset{\overset{\displaystyle O}{\|}}{P}-(OR^{12})_2$$

wherein $R^{12}$ comprises hydrogen; alkyl or alkenyl having from 1 to about 20 carbon atoms; substituted or unsubstituted phenyl; an alkyl acrylate or methacrylate residue having from 2 to about 10 carbon atoms in the alkyl segment; a residue of a hydroxyalkyl acrylate or methacrylatelactone adduct having the following formula:

$$CH_2=\overset{\overset{\displaystyle R^2}{|}}{C}-\underset{\underset{\displaystyle O}{\|}}{C}-O-R^3-O\,[\overset{\overset{\displaystyle O}{\|}}{C}-(\overset{\overset{\displaystyle R^4}{|}}{\underset{\underset{\displaystyle R^4}{|}}{C}})_x-O]_yH$$

wherein $R^2$ is hydrogen or methyl, $R^3$ is an alkylene group of 2 to about 10 carbon atoms, $R^4$ is hydrogen or an alkyl group of from 1 to about 12 carbon atoms, x is from about 4 to about 7 and y is from 1 to about 10; or mixtures thereof.

12. A dispersion comprising a medium, particles dispersed therein and a phosphorylated composition of a vinyl chloride based polymer for enhancing the dispersibility of said particles in said medium,

characterized in that said composition is a composition according to any one of claims 1 to 11, said composition being present in an amount sufficient to enhance the extent of dispersion of said particles in said medium.

**13.** The dispersion of claim 12 wherein said particles are zinc particles.

**14.** A magnetic recording medium comprising a substrate and a magnetic recording layer thereon comprising a cured binder system and magnetic particles, said binder system having included therein a phosphorylated composition of a vinyl chloride based polymer for enhancing the dispersibility of said particles in said medium, characterized in that said composition is a composition according to any one of claims 1 to 11, said composition being present in an amount sufficient to enhance the dispersion characteristics of said magnetic coating layer.

**15.** A method of enhancing the magnetic properties of a magnetic coating comprising a binder system and magnetic particles dispersed therein following storage thereof which comprises adding to said magnetic coating a phosphorylated composition of a vinyl chloride based polymer for enhancing the dispersibility of said particles in said medium, characterized in that said composition is a composition according to any one of claims 1 to 11, said composition being employed in an amount sufficient to enhance the magnetic properties of said magnetic coating.

## Revendications

**1.** Composition phosphorylée d'un polymère à base de chlorure de vinyle destinée à accroître la dispersibilité de particules dans un milieu, dans laquelle ledit polymère à base de chlorure de vinyle possède une moyenne numérique du poids moléculaire d'au moins environ 1000, au moins environ 0,1 % en poids de groupes hydroxyle étant présent dans ce polymère ou dans les monomères à partir desquels ledit polymère est préparé avant la phosphorylation, et est choisi entre

(i) des copolymères et terpolymères chlorure de vinyle-ester vinylique dans lesquels au moins certains desdits groupes ester vinylique sont hydrolysés, ledit ester vinylique étant un ester d'un acide carboxylique saturé ayant 1 à 6 atomes de carbone, et

(ii) un copolymère ou terpolymère, à fonctionnalité hydroxyle, de chlorure de vinyle, d'un acrylate ou méthacrylate d'hydroxyalkyle ayant 2 à 5 atomes de carbone dans le segment alkyle, et d'un ester vinylique d'un acide carboxylique saturé ayant 1 à 6 atomes de carbone ;

un nombre suffisant des groupes hydroxyle dans ledit polymère à base de chlorure de vinyle ayant été phosphorylé pour fournir au moins environ 0,1 % de phosphore, en poids.

**2.** Composition suivant la revendication 1, dans lauqelle la moyenne numérique du poids moléculaire dudit copolymère ou terpolymère de chlorure de vinyle est égale à au moins environ 2000.

**3.** Composition suivant la revendication 1, dans laquelle la moyenne numérique du poids moléculaire du copolymère ou terpolymère de chlorure de vinyle est égale à au moins environ 4000.

**4.** Composition suivant la revendication 1, dans laquelle la moyenne numérique du poids moléculaire du copolymère ou terpolymère de chlorure de vinyle est égale à au moins environ 8000.

**5.** Composition suivant la revendication 1, dans laquelle la moyenne numérique du poids moléculaire du copolymère ou terpolymère de chlorure de vinyle est égale à au moins environ 23 000.

**6.** Composition suivant l'une quelconque des revendications 1 à 5, dans laquelle le copolymère ou terpolymère de chlorure de vinyle possède un rapport molaire d'environ 28 à environ 32 groupes chlorure de vinyle à environ 0,5 à environ 8 groupes alcool vinylique et à 0 à environ 4 groupes ester vinylique.

**7.** Composition suivant l'une quelconque des revendications 1 à 5, dans laquelle le copolymère ou terpolymère de chlorure de vinyle est un copolymère ou terpolymère à fonctionnalité hydroxyle ayant un rapport molaire d'environ 12 à environ 20 groupes chlorure de vinyle à environ 1 à environ 3 groupes acrylate ou méthacrylate d'hydroxyalkyle et à 0 à environ 3 groupes ester vinylique.

8. Composition suivant la revendication 6 ou 7, dans laquelle l'ester vinylique est l'acétate de vinyle.

9. Composition suivant la revendication 8, dans laquelle le copolymère ou terpolymère de chlorure de vinyle est un copolymère chlorure de vinyle-acrylate d'hydroxyéthyle ; un copolymère chlorure de vinyle-acrylate d'hydroxypropyle ; un copolymère chlorure de vinyle-acrylate d'hydroxyéthyle-acétate de vinyle ; ou un terpolymère chlorure de vinyle-acrylate d'hydroxypropyle-acétate de vinyle.

10. Composition suivant la revendication 1, qui consiste en un copolymère ou terpolymère de chlorure de vinyle phosphorylé dans lequel un pourcentage suffisant des groupes hydroxyle présents est phosphorylé pour fournir au moins environ 0,3 % de phosphore, en poids.

11. Composition suivant l'une quelconque des revendications 1 à 10, dans laquelle le groupe phosphoré du groupe hydroxyle phosphorylé est caractérisé par la formule :

$$-\overset{\overset{\displaystyle O}{\|}}{P}-(OR^{12})_2$$

dans laquelle $R^{12}$ représente l'hydrogène ; un groupe alkyle ou alcényle ayant 1 à environ 20 atomes de carbone ; un groupe phényle substitué ou non substitué ; un résidu acrylate ou méthacrylate d'alkyle ayant 2 à environ 10 atomes de carbone dans le segment alkyle ; un résidu d'un produit d'addition acrylate ou méthacrylate d'hydroxyalkyle-lactone répondant à la formule suivante :

$$CH_2=\overset{\overset{\displaystyle R^2}{|}}{C}-\underset{\underset{\displaystyle O}{\|}}{C}-O-R^3-O\,[\overset{\overset{\displaystyle O}{\|}}{C}-(\overset{\overset{\displaystyle R^4}{|}}{\underset{\underset{\displaystyle R^4}{|}}{C}})_x-O]_yH$$

dans laquelle $R^2$ représente l'hydrogène ou un groupe méthyle, $R^3$ représente un groupe alkylène ayant 2 à environ 10 atomes de carbone, $R^4$ représente l'hydrogène ou un groupe alkyle ayant 1 à environ 12 atomes de carbone, $\underline{x}$ a une valeur d'environ 4 à environ 7 et $\underline{y}$ a une valeur de 1 à environ 10 ; ou leurs mélanges.

12. Dispersion comprenant un milieu, des particules dispersées dans ledit milieu et une composition phosphorylée d'un polymère à base de chlorure de vinyle destinée à accroître la dispersibilité desdites particules dans ledit milieu, caractérisée en ce que ladite composition est une composition suivant l'une quelconque des revendications 1 à 11, ladite composition étant présente en une quantité suffisante pour accroître le degré de dispersion desdites particules dans ledit milieu.

13. Dispersion suivant la revendication 12, dans laquelle les particules sont des particules de zinc.

14. Support magnétique d'enregistrement comprenant un substrat et, sur ledit substrat, une couche magnétique d'enregistrement comprenant une composition de liant durcie et des particules magnétiques, ladite composition de liant renfermant une composition phosphorylée d'un polymère à base de chlorure de vinyle destinée à accroître la dispersibilité desdites particules dans ledit milieu, caractérisé en ce que ladite composition est une composition suivant l'une quelconque des revendications 1 à 11, ladite composition étant présente en une quantité suffisante pour accroître les caractéristiques de dispersion de la couche de revêtement magnétique.

15. Procédé pour accroître les propriétés magnétiques d'un revêtement magnétique comprenant une composition de liant et des particules magnétiques dispersées dans ladite composition, après son entreposage, qui consiste à ajouter audit revêtement magnétique une composition phosphorylée d'un polymère à base de chlorure de vinyle pour accroître la dispersibilité desdites particules dans ledit milieu, caractérisé en ce que ladite composition est une composition suivant l'une quelconque des

revendications 1 à 11, ladite composition étant utilisée en une quantité suffisante pour accroître les propriétés magnétiques dudit revêtement magnétique.

**Patentansprüche**

1. Phosphorylierte Zusammensetzung eines Polymers auf Vinylchloridbasis zur Erhöhung des Dispersionsvermögens von Teilchen in einem Medium,
worin das Polymer auf Vinylchloridbasis ein Zahlenmittel des Molekulargewichts von mindestens etwa 1000 aufweist und mindestens etwa 0,1 Gewichtsprozent Hydroxylgruppen darin oder in den Monomeren anwesend sind, aus denen das Polymer vor der Phosphorylierung hergestellt wird, und aus
(i) Vinylchlorid/Vinylester-Copolymeren und -Terpolymeren, worin mindestens einige der Vinylestergruppen hydrolysiert sind, wobei der Vinylester ein Ester einer gesättigten Carbonsäure mit 1 bis 6 Kohlenstoffatomen ist, und
(ii) einem hydroxy-funktionellen Copolymer oder Terpolymer von Vinylchlorid, einem Hydroxyalkylacrylat oder -methacrylat mit 2 bis 5 Kohlenstoffatomen im Alkylsegment und einem Vinylester einer gesättigten Carbonsäure mit 1 bis 6 Kohlenstoffatomen,
ausgewählt ist; wobei eine ausreichende Zahl von Hydroxylgruppen in dem Polymer auf Vinylchloridbasis phosphoryliert worden sind, um mindestens 0,1 Gewichtsprozent Phosphor zu ergeben.

2. Zusammensetzung nach Anspruch 1, worin das Zahlenmittel des Molekulargewichts des Vinylchlorid-Copolymers oder -Terpolymers mindestens etwa 2000 beträgt.

3. Zusammensetzung nach Anspruch 1, worin das Zahlenmittel des Molekulargewichts des Vinylchlorid-Copolymers oder -Terpolymers mindestens etwa 4000 beträgt.

4. Zusammensetzung nach Anspruch 1, worin das Zahlenmittel des Molekulargewichts des Vinylchlorid-Copolymers oder -Terpolymers mindestens etwa 8000 beträgt.

5. Zusammensetzung nach Anspruch 1, worin das Zahlenmittel des Molekulargewichts des Vinylchlorid-Copolymers oder -Terpolymers mindestens etwa 23 000 beträgt.

6. Zusammensetzung nach irgendeinem der Ansprüche 1 bis 5, worin das Vinylchlorid-Copolymer oder -Terpolymer ein Molverhältnis von etwa 28 bis etwa 32 Vinylchlorid zu etwa 0,5 bis etwa 8 Vinylalkokol und zu 0 bis etwa 4 Vinylester aufweist.

7. Zusammensetzung nach irgendeinem der Ansprüche 1 bis 5, worin das Vinylchlorid-Copolymer oder -Terpolymer ein hydroxy-funktionelles Copolymer oder Terpolymer ist, welches ein Molverhältnis von etwa 12 bis etwa 20 Vinylchlorid zu etwa 1 bis etwa 3 Hydroxyalkylacrylat oder -methacrylat und zu 0 bis etwa 3 Vinylester aufweist.

8. Zusammensetzung nach Anspruch 6 oder 7, worin der Vinylester Vinylacetat ist.

9. Zusammensetzung nach Anspruch 8, worin das Vinylchlorid-Copolymer oder -Terpolymer ein Vinylchlorid/Hydroxyethylacrylat-Copolymer, ein Vinylchlorid/Hydroxypropylacrylat-Copolymer, ein Vinylchlorid/Hydroxyethylacrylat/Vinylacetat-Copolymer oder ein Vinylchlorid/Hydroxypropylacrylat/Vinylacetat-Terpolymer ist.

10. Zusammensetzung nach Anspruch 1, worin die Zusammensetzung ein phosphoryliertes Vinylchlorid-Copolymer oder -Terpolymer ist, worin eine ausreichende Zahl der anwesenden Hydroxylgruppen phosphoryliert ist, um mindestens etwa 0,3 Gewichtsprozent Phosphor zu ergeben.

11. Zusammensetzung nach irgendeinem der Ansprüche 1 bis 10, worin die Phosphorgruppierung der phosphorylierten Hydroxylgruppe durch die Formel

$$-\overset{\displaystyle O}{\overset{\|}{P}}-(OR^{12})_2$$

gekennzeichnet ist,
worin $R^{12}$ Wasserstoff, Alkyl oder Alkenyl mit 1 bis etwa 20 Kohlenstoffatomen, substituiertes oder unsubstituiertes Phenyl, einen Alkylacrylat- oder - methacrylatrest mit 2 bis etwa 10 Kohlenstoffatomen im Alkylsegment, einen Rest aus einem Hydroxyalkylacrylat- oder -methacrylat/Lacton-Addukt der folgenden Formel

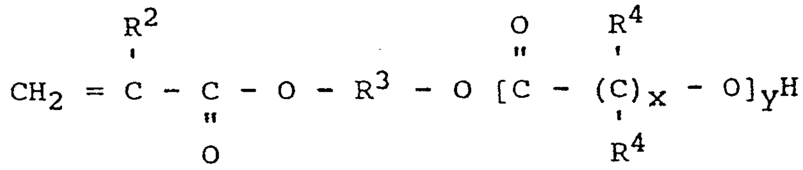

worin $R^2$ Wasserstoff oder Methyl ist, $R^3$ eine Alkylengruppe mit 2 bis etwa 10 Kohlenstoffatomen bedeutet, $R^4$ Wasserstoff oder eine Alkylgruppe mit 1 bis etwa 12 Kohlenstoffatomen darstellt, x etwa 4 bis etwa 7 bedeutet, und y 1 bis etwa 10 ist,
oder Mischungen davon umfaßt.

**12.** Dispersion, umfassend ein Medium, darin dispergierte Teilchen und eine phosphorylierte Zusammensetzung eines Polymers auf Vinylchloridbasis zur Erhöhung des Dispersionsvermögens der Teilchen im Medium,
dadurch gekennzeichnet, daß die Zusammensetzung eine Zusammensetzung nach irgendeinem der Ansprüche 1 bis 11 ist, wobei die Zusammensetzung in einer Menge verhanden ist, die ausreicht, um den Dispersionsgrad der Teilchen in dem Medium zu erhöhen.

**13.** Dispersion nach Anspruch 12, worin die Teilchen Zinkteilchen sind.

**14.** Magnetisches Aufzeichnungsmaterial, umfassend ein Substrat und eine darauf befindliche magnetische Aufzeichnungsschicht, welche ein gehärtetes Bindemittelsystem und magnetische Teilchen umfaßt, wobei das Bindemittelsystem eine phosphorylierte Zusammensetzung eines Polymers auf Vinylchloridbasis zur Erhöhung des Dispersionsvermögens der Teilchen in dem Medium einschließt,
dadurch gekennzeichnet, daß die Zusammensetzung eine Zusammensetzung nach irgendeinem der Ansprüche 1 bis 11 ist, wobei die Zusammensetzung in einer Menge vorhanden ist, die ausreicht, um die Dispersioneigenschaften der magnetischen Überzugsschicht zu verstärken.

**15.** Verfahren zur Verbesserung der magnetischen Eigenschaften eines magnetischen Überzugs, der ein Bindemittelsystem und darin dispergierte Teilchen umfaßt, nach dessen Lagerung, umfassend die Zugabe einer phosphorylierten Zusammensetzung eines Polymers auf Vinylchloridbasis zur Erhöhung des Dispersionsvermögens der Teilchen in dem Medium zu dem magnetischen Überzug,
dadurch gekennzeichnet, daß die Zusammensetzung eine Zusammmensetzung nach irgendeinen der Ansprüche 1 bis 11 ist, wobei die Zusammensetzung in einer Menge eingesetzt wird, die ausreicht, um die magnetischen Eigenschaften des magnetischen Überzugs zu verbessern.